# EUROPEAN PATENT APPLICATION

(11) **EP 4 415 190 A1**
(43) Date of publication of application: **14.08.2024**
(21) Application number: 24156879.9
(22) Date of filing: 09.02.2024
(51) Int. Cl.: H02B 1/20, H02G 5/02

(54) **POWER DISTRIBUTION UNIT WITH UNIQUE BUSBAR MOUNTING DESIGN**

(30) Priority: 10.02.2023 US 202363444784 P; 08.02.2024 US 202418436436
(71) Applicant: Vertiv Corporation, Worthington, OH 43085 (US)
(72) Inventor: DOWELL, Danny, Delaware, 43015 (US); STIGER, Phil, Marion, 43302 (US); FOSSEN, John Van, Powell, 43065 (US)
(74) Representative: VKK Patentanwälte PartG mbB

(57) **Abstract**

A power distribution unit of an equipment cabinet includes a primary bracket, and a secondary bracket. A first central standoff insulator is mounted to a front of the secondary bracket and extends through a hole in the primary bracket. A second standoff insulator is mounted to a front of the first central standoff insulator, and a central busbar is mounted to a front of the second central standoff insulator. An insulator comprises a rear portion mounted between the first central standoff insulator and the second central standoff insulator and has a first side portion extending frontward past a first side of the central busbar and a second side portion extending frontward past a second side of the central busbar. First and second lateral standoff insulators and first and second lateral busbars, respectively mounted to the first and second lateral standoff insulators, maybe mounted to the primary bracket.

## Description

### CROSS-REFERENCES TO RELATED APPLICATIONS

This U.S. Utility Patent Application claims priority to US Provisional Patent Application Serial No. 63/444,784, filed February 10, 2023, which is incorporated herein by reference in its entirety.

### TECHNICAL FIELD

Apparatuses and methods consistent with example embodiments relate to electrical/electronics equipment units, and more particularly to an electrical/electronics power distribution unit with a unique busbar mounting design.

### BACKGROUND

Power distribution equipment units are typically used to receive output power from a power transformer cabinet and to distribute the received power via a plurality of output distribution power cables to a plurality of different power output panelboards. Such power distribution units (PDUs) with built-in monitoring and controls require printed circuit boards, power supplies, and other electronic modules which are installed in the unit in secure and protected location(s). Field input power cables are required to provide energy to the PDU. These input cables may be in a size range of about 1/0AWG to 600Kcmil size range, with compression/mechanical lugs. Thus, these lugs and cables are large and take up a significant amount of space within the PDU. There may be three to five conductors per input, including, for example, phase A/1, B/2, C/3, neutral, and ground conductors. The lugs of these input cables and the busbar they connect to are live parts with hazardous voltage on them.

Industry standards, such as those of UL, NEC, IEC, and others, require that specific spacings or airgaps are maintained between and among hazardous voltage components. The spacing/airgap varies, depending on the standard in use. Thus, designing the arrangement of these very large, often oversized cables all feeding into a single breaker in the PDU is a significant engineering challenge as they must be spaced out as they land on the breaker in order to maintain electrical separation.

In some related art arrangements, a center busbar is elevated or "pushed-out" away from the left and right busbars. This provides spacing by moving the center busbar forward in space and thus away from the other two phases. Spacing between the outer busbars may be maintained. However, this solution requires sufficient depth within the PDU. It is desirable to design an arrangement in which the depth required for the breakers, busbars, and input cables is significantly reduced.

### SUMMARY

Example embodiments may address at least the above problems and/or disadvantages and other disadvantages not described above. Also, example embodiments are not required to overcome the disadvantages described above, and may not overcome any of the problems described above.

According to an aspect of an example embodiment, a power distribution unit comprises: a primary bracket comprising a hole therethrough; a secondary bracket mounted to a rear of the primary bracket, around the hole; a first central standoff insulator mounted to a front of the secondary bracket and extending through the hole; a second central standoff insulator mounted to a front of the first central standoff insulator; a central busbar mounted to a front of the second central standoff insulator; an insulator comprising: a rear portion mounted between the first central standoff insulator and the second central standoff insulator, a first side portion extending frontward past a first side of the central busbar, and a second side portion extending frontward past a second side of the central busbar.

The power distribution unit may further comprise: a first lateral standoff insulator mounted to a front of the primary bracket to a first side of the first central standoff insulator; a second lateral standoff insulator mounted to the front of the primary bracket to a second side of the first central standoff insulator; a first lateral busbar mounted to a front of the first lateral standoff insulator; and a second lateral busbar mounted to a front of the second lateral standoff insulator.

The first side portion of the insulator may extend between the second central standoff insulator and the central busbar on one side thereof and the first lateral standoff insulator and the first lateral busbar on an opposite side thereof; and the second side portion of the insulator may extend between the central standoff insulator and the central busbar on one side thereof and the second lateral standoff insulator and the second lateral busbar on an opposite side thereof.

The insulator may comprise polypropylene.

The insulator may have a substantially U-shaped cross-section.

The primary bracket may comprise sheet metal.

The secondary bracket may comprise sheet metal.

The hole in the primary bracket may be substantially circular.

According to an aspect of another example embodiment, an equipment cabinet may comprise: a cabinet frame; a door connected to the cabinet frame, the door comprising a power distribution unit comprising: a primary bracket comprising a hole therethrough; a secondary bracket mounted to a rear of the primary bracket around the hole; a first central standoff insulator mounted to a front of the secondary bracket and extending through the hole; a second central standoff insulator mounted to a front of the first central standoff insulator; a central busbar mounted to a front of the second central standoff insulator; an insulator comprising: a rear portion mounted between the first central standoff insulator and the second central standoff insulator, a first side portion extending frontward past a first side of the central busbar, and a second side portion extending frontward past a second side of the central busbar.

According to an aspect of another example embodiment, a method of assembling a power distribution unit may comprise: forming a hole in a primary bracket; mounting a secondary bracket to a rear of the primary bracket, around the hole; mounting a first central standoff insulator to a front of the secondary bracket such that the first central standoff insulator extends through the hole; mounting a second central standoff insulator to a front of the first central standoff insulator; mounting a central busbar to a front of the second central standoff insulator; and mounting an insulator by mounting a rear portion of the insulator between the first central standoff insulator and the second central standoff insulator, extending a first side portion of the insulator past a first side of the central busbar, and extending a second side portion of the insulator past a second side of the central busbar.

### BRIEF DESCRIPTION OF THE DRAWINGS

The above and/or other aspects will become apparent and more readily appreciated from the following description of example embodiments, taken in conjunction with the accompanying drawings, in which:
FIG. 1 illustrates an equipment cabinet according to an example embodiment;
FIG. 2 is a perspective view of a mounting design of a power distribution unit according to an example embodiment;
FIG. 3 is a top view of the mounting design of FIG. 2;
FIG. 4 is a top, perspective view of a portion of the mounting design of FIG. 2; and
FIG. 5 is a method according to the principles of the present disclosure.

### DETAILED DESCRIPTION

Reference will now be made in detail to example embodiments which are illustrated in the accompanying drawings, wherein like reference numerals refer to like elements throughout. In this regard, the example embodiments may have different forms and may not be construed as being limited to the descriptions set forth herein.

It will be understood that the terms "include," "including", "comprise, and/or "comprising," when used in this specification, specify the presence of stated features, integers, steps, operations, elements, and/or components, but do not preclude the presence or addition of one or more other features, integers, steps, operations, elements, components, and/or groups thereof.

It will be further understood that, although the terms "first," "second," "third," etc., may be used herein to describe various elements, components, regions, layers and/or sections, these elements, components, regions, layers and/or sections may not be limited by these terms. These terms are only used to distinguish one element, component, region, layer or section from another element, component, region, layer or section.

As used herein, the term "and/or" includes any and all combinations of one or more of the associated listed items. Expressions such as "at least one of," when preceding a list of elements, modify the entire list of elements and do not modify the individual elements of the list.

Various terms are used to refer to particular system components. Different companies may refer to a component by different names - this document does not intend to distinguish between components that differ in name but not function.

Matters of these example embodiments that are obvious to those of ordinary skill in the technical field to which these example embodiments pertain may not be described herein in detail.

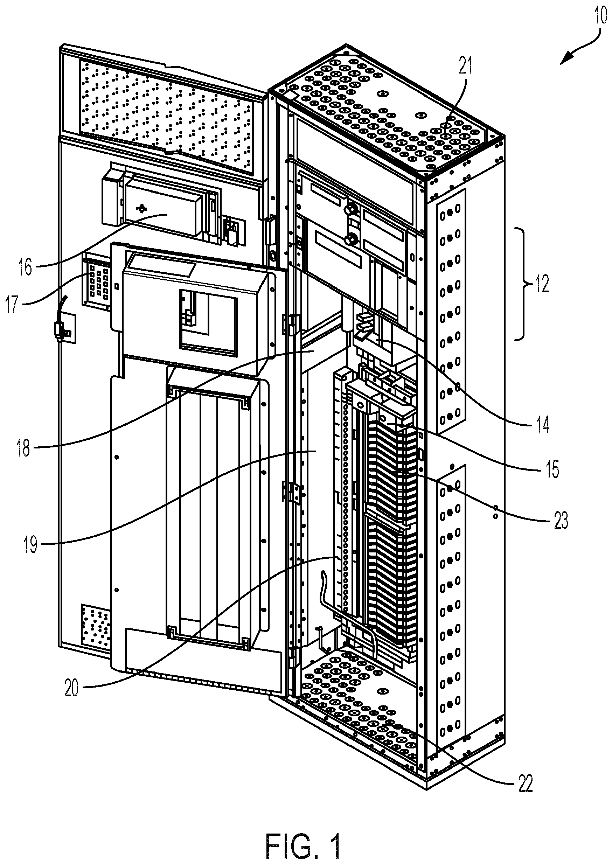

Referring to FIG. 1, an example electrical/electronics equipment cabinet 10 (hereinafter simply "cabinet 10") is shown. The cabinet 10 includes customer cable input and output areas 21 and 22 at the top and bottom of the cabinet 10, respectively. The cabinet 10 also includes a control area 12, a main input circuit breaker 14, output circuit breakers 15, an output panel board 23, current transformers/sensors 20, a customer cable routing area 19, a control and sense wiring routing trough 18, remote communication cards 17, and a human machine interface 16.

One or more example embodiments described herein provide a busbar and spacing design in which a primary busbar mounting bracket has a hole added behind the center busbar location. A separate sheet metal bracket is secured, behind the hole, to the primary busbar mounting bracket, functioning as a mounting location for the center busbar and electrical standoffs. Accordingly, one or more example embodiments enable a reduction in the total depth of the breaker and busbar solution which still providing sufficient mounting strength and air gaps.

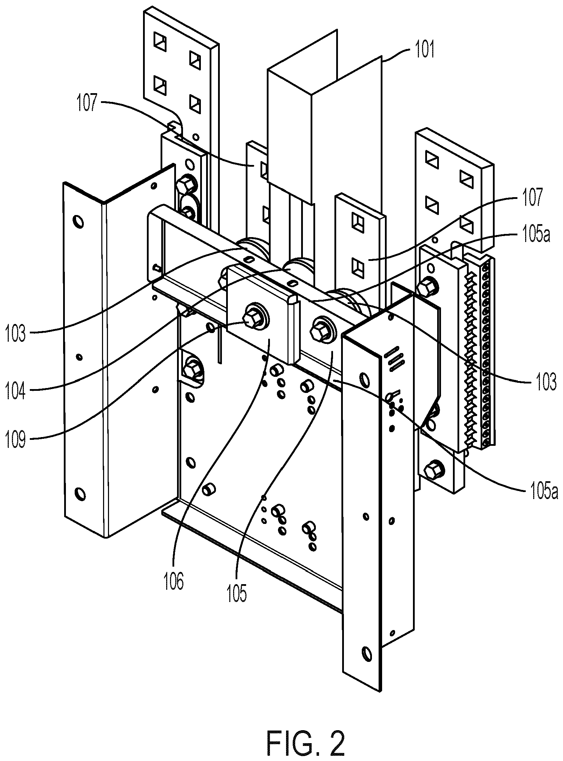

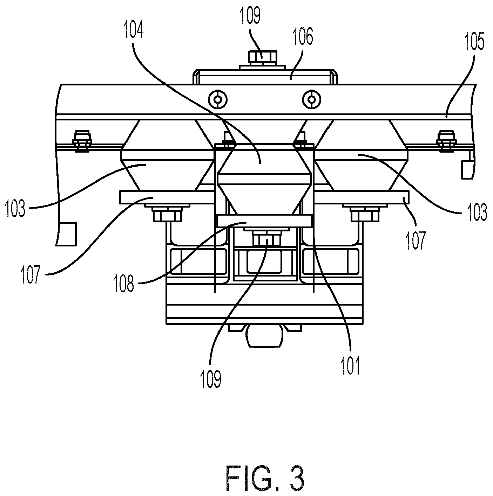

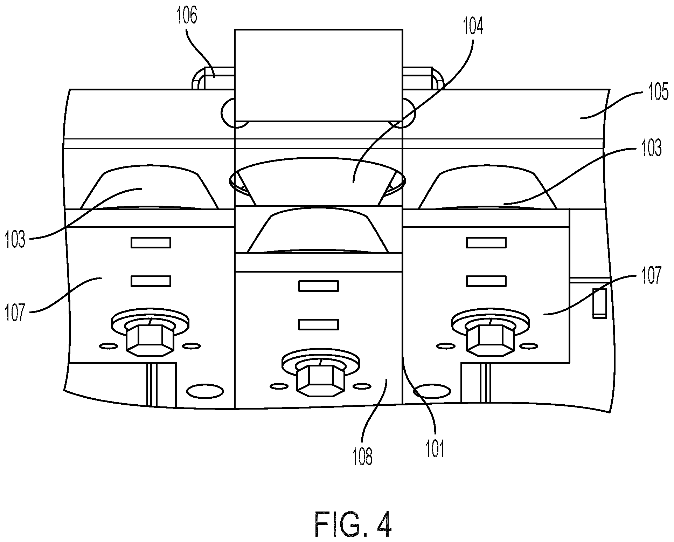

FIG. 2 is a perspective view of a mounting design according to an example embodiment; FIG. 3 is a top view of the mounting design of FIG. 2; and FIG. 4 is a top, perspective view of a portion of the mounting design of FIG. 2. A hole 110 (*see* FIG. 4) is provided in the sheet metal of the primary busbar mounting bracket 105 that mounts the breaker to the PDU, behind a location of the center busbar 108 (*see* FIGs. 3 and 4), and an additional sheet metal bracket 106 is secured to the primary busbar mounting bracket 105, behind the hole 110, using a lug 109. The shape of the primary mounting bracket 105, including opposing edges 105a, which extend, normal to the central region of the primary bracket 105, towards a rear of the unit, enable the additional bracket 106 to be secured to the primary bracket 105 around the hole 110. Alternately, or in a case in which the primary bracket 105 is substantially planar without extending sides, the additional bracket 106 may have a perimeter larger than the perimeter of the hole 110, enabling the additional bracket 106 to be mounted to the primary bracket 105 around the hole 110. Center busbar electrical standoff insulators 104 are mounted, via the lug 109, to the front of the additional bracket 106; and the center busbar 108 is mounted on the front of the center standoff insulators 104.

Electrical insulation 101, made of, for example, polypropylene, Nomex^{®}, or another similar material, is mounted between adjacent ones the stacked central standoff insulators 104 and partially encloses the center busbar 108. As shown in FIGs. 2 and 4, the electrical insulation 101 may have a substantially U-shaped cross-section, as viewed from above, which extends between the two central standoff insulators 104 and has sides that extend forward, between the center busbar 108 and the adjacent left and right busbars 107, respectively. This insulation 101, thus, provides electrical isolation between the center busbar 108 and the left and right busbars 107.

The two central standoff insulators 104 are stacked behind the central busbar 108. The hole 110 in the primary busbar mounting bracket 105 enables one of the central standoff insulators 104 to extend through the primary mounting bracket 105 and rest against the front of the additional sheet metal bracket 106. The hole in 110 in the primary busbar mounting bracket 105 may be round or any other shape which enables a central standoff insulator 104 to extend therethrough to be mounted against the front of the additional sheet metal bracket 106. The insulation 101 extends between the two central standoff insulators 104, and extends to insulate the central busbar 108 from the left and right busbars 107, as shown in FIGs. 3 and 4.

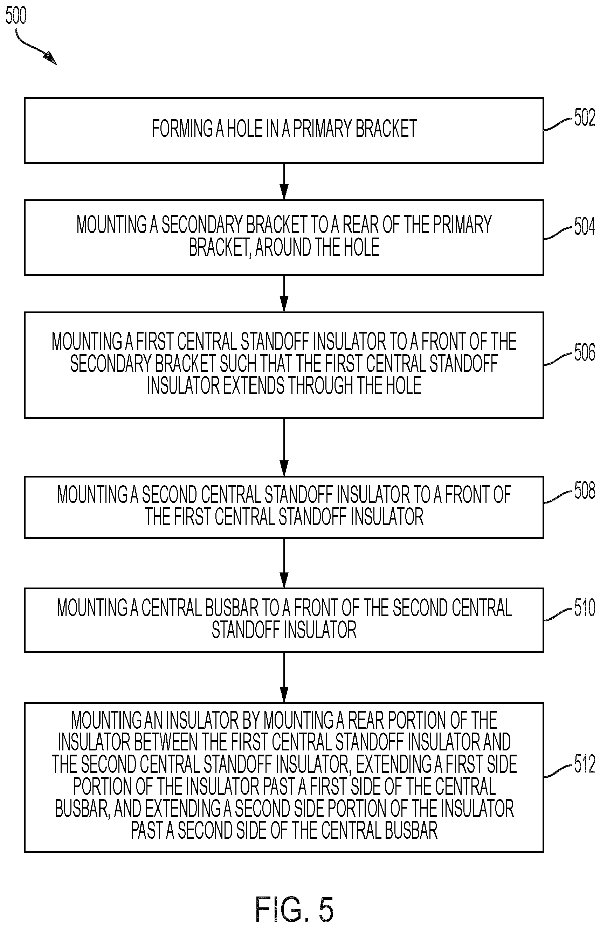

FIG. 5 generally illustrates a method 500, according to the principles of the present disclosure. At 502, the method 500 forms a hole in a primary bracket.

At 504, the method 500 mounts a secondary bracket to a rear of the primary bracket, around the hole.

At 506, the method 500 mounts a first central standoff insulator to a front of the secondary bracket such that the first central standoff insulator extends through the hole.

At 508, the method 500 mounts a second central standoff insulator to a front of the first central standoff insulator.

At 510, the method 500 mounts a central busbar to a front of the second central standoff insulator.

At 512, the method 500 mounts an insulator by mounting a rear portion of the insulator between the first central standoff insulator and the second central standoff insulator, extending a first side portion of the insulator past a first side of the central busbar, and extending a second side portion of the insulator past a second side of the central busbar.

In some embodiments, a power distribution unit includes a primary bracket comprising a hole therethrough; a secondary bracket mounted to a rear of the primary bracket, around the hole; a first central standoff insulator mounted to a front of the secondary bracket and extending through the hole; a second central standoff insulator mounted to a front of the first central standoff insulator; a central busbar mounted to a front of the second central standoff insulator; an insulator comprising: a rear portion mounted between the first central standoff insulator and the second central standoff insulator, a first side portion extending frontward past a first side of the central busbar, and a second side portion extending frontward past a second side of the central busbar.

In some embodiments, the power distribution also includes a first lateral standoff insulator mounted to a front of the primary bracket to a first side of the first central standoff insulator; a second lateral standoff insulator mounted to the front of the primary bracket to a second side of the first central standoff insulator; a first lateral busbar mounted to a front of the first lateral standoff insulator; and a second lateral busbar mounted to a front of the second lateral standoff insulator.

In some embodiments: the first side portion of the insulator extends between the second central standoff insulator and the central busbar on one side thereof and the first lateral standoff insulator and the first lateral busbar on an opposite side thereof; and the second side portion of the insulator extends between the central standoff insulator and the central busbar on one side thereof and the second lateral standoff insulator and the second lateral busbar on an opposite side thereof.

In some embodiments, the insulator comprises polypropylene.

In some embodiments, the insulator has a substantially U-shaped cross-section.

In some embodiments, the primary bracket comprises sheet metal.

In some embodiments, the secondary bracket comprises sheet metal.

In some embodiments, the hole in the primary bracket is substantially circular.

In some embodiments, an equipment cabinet includes: a cabinet frame; a door connected to the cabinet frame, the door comprising a power distribution unit comprising: a primary bracket comprising a hole therethrough; a secondary bracket mounted to a rear of the primary bracket around the hole; a first central standoff insulator mounted to a front of the secondary bracket and extending through the hole; a second central standoff insulator mounted to a front of the first central standoff insulator; a central busbar mounted to a front of the second central standoff insulator; an insulator comprising: a rear portion mounted between the first central standoff insulator and the second central standoff insulator, a first side portion extending frontward past a first side of the central busbar, and a second side portion extending frontward past a second side of the central busbar.

In some embodiments, the power distribution unit further includes: a first lateral standoff insulator mounted to a front of the primary bracket to a first side of the first central standoff insulator; a second lateral standoff insulator mounted to the front of the primary bracket to a second side of the first central standoff insulator; a first lateral busbar mounted to a front of the first lateral standoff insulator; and a second lateral busbar mounted to a front of the second lateral standoff insulator.

In some embodiments: the first side portion of the insulator extends between the second central standoff insulator and the central busbar on one side thereof and the first lateral standoff insulator and the first lateral busbar on an opposite side thereof; and the second side portion of the insulator extends between the central standoff insulator and the central busbar on one side thereof and the second lateral standoff insulator and the second lateral busbar on an opposite side thereof.

In some embodiments, the insulator comprises polypropylene.

In some embodiments, the insulator has a substantially U-shaped cross-section.

In some embodiments, the primary bracket comprises sheet metal.

In some embodiments, the secondary bracket comprises sheet metal.

In some embodiments, the hole in the primary bracket is substantially circular.

In some embodiments, a method of assembling a power distribution unit includes forming a hole in a primary bracket; mounting a secondary bracket to a rear of the primary bracket, around the hole; mounting a first central standoff insulator to a front of the secondary bracket such that the first central standoff insulator extends through the hole; mounting a second central standoff insulator to a front of the first central standoff insulator; mounting a central busbar to a front of the second central standoff insulator; and mounting an insulator by mounting a rear portion of the insulator between the first central standoff insulator and the second central standoff insulator, extending a first side portion of the insulator past a first side of the central busbar, and extending a second side portion of the insulator past a second side of the central busbar.

In some embodiments, the method also includes: mounting a first lateral standoff insulator to a front of the primary bracket to a first side of the first central standoff insulator; mounting a second lateral standoff insulator to a front of the primary bracket to a second side of the first central standoff insulator; mounting a first lateral busbar to a front of the first lateral standoff insulator; and mounting a second lateral busbar to a front of the second lateral standoff insulator.

In some embodiments: the first side portion of the insulator extends between the second central standoff insulator and the central busbar on one side thereof and the first lateral standoff insulator and the first lateral busbar on an opposite side thereof; and the second side portion of the insulator extends between the central standoff insulator and the central busbar on one side thereof and the second lateral standoff insulator and the second lateral busbar on an opposite side thereof.

In some embodiments, the insulator comprises polypropylene.

It may be understood that the example embodiments described herein may be considered in a descriptive sense only and not for purposes of limitation. Descriptions of features or aspects within each example embodiment may be considered as available for other similar features or aspects in other example embodiments.

While example embodiments have been described with reference to the figures, it will be understood by those of ordinary skill in the art that various changes in form and details may be made therein without departing from the spirit and scope as defined by the following claims.

## Claims

1. A power distribution unit comprising:
a primary bracket comprising a hole therethrough;
a secondary bracket mounted to a rear of the primary bracket, around the hole;
a first central standoff insulator mounted to a front of the secondary bracket and extending through the hole;
a second central standoff insulator mounted to a front of the first central standoff insulator;
a central busbar mounted to a front of the second central standoff insulator;
an insulator comprising: a rear portion mounted between the first central standoff insulator and the second central standoff insulator, a first side portion extending frontward past a first side of the central busbar, and a second side portion extending frontward past a second side of the central busbar.

2. The power distribution unit of claim 1, further comprising:
a first lateral standoff insulator mounted to a front of the primary bracket to a first side of the first central standoff insulator;
a second lateral standoff insulator mounted to the front of the primary bracket to a second side of the first central standoff insulator;
a first lateral busbar mounted to a front of the first lateral standoff insulator; and
a second lateral busbar mounted to a front of the second lateral standoff insulator.

3. The power distribution unit of claim 2, wherein:
the first side portion of the insulator extends between the second central standoff insulator and the central busbar on one side thereof and the first lateral standoff insulator and the first lateral busbar on an opposite side thereof; and
the second side portion of the insulator extends between the central standoff insulator and the central busbar on one side thereof and the second lateral standoff insulator and the second lateral busbar on an opposite side thereof.

4. The power distribution unit of claim 1, wherein the insulator comprises polypropylene.

5. The power distribution unit of claim 1, wherein the insulator has a substantially U-shaped cross-section.

6. The power distribution unit of claim 1, wherein the primary bracket comprises sheet metal.

7. The power distribution unit of claim 1, wherein the secondary bracket comprises sheet metal.

8. The power distribution unit of claim 1, wherein the hole in the primary bracket is substantially circular.

9. An equipment cabinet comprising:
a cabinet frame;
a door connected to the cabinet frame, the door comprising a power distribution unit comprising:
a primary bracket comprising a hole therethrough;
a secondary bracket mounted to a rear of the primary bracket around the hole;
a first central standoff insulator mounted to a front of the secondary bracket and extending through the hole;
a second central standoff insulator mounted to a front of the first central standoff insulator;
a central busbar mounted to a front of the second central standoff insulator;
an insulator comprising: a rear portion mounted between the first central standoff insulator and the second central standoff insulator, a first side portion extending frontward past a first side of the central busbar, and a second side portion extending frontward past a second side of the central busbar.

10. The equipment cabinet of claim 9, wherein the power distribution unit further comprises:
a first lateral standoff insulator mounted to a front of the primary bracket to a first side of the first central standoff insulator;
a second lateral standoff insulator mounted to the front of the primary bracket to a second side of the first central standoff insulator;
a first lateral busbar mounted to a front of the first lateral standoff insulator; and
a second lateral busbar mounted to a front of the second lateral standoff insulator.

11. The equipment cabinet of claim 10, wherein:
the first side portion of the insulator extends between the second central standoff insulator and the central busbar on one side thereof and the first lateral standoff insulator and the first lateral busbar on an opposite side thereof; and
the second side portion of the insulator extends between the central standoff insulator and the central busbar on one side thereof and the second lateral standoff insulator and the second lateral busbar on an opposite side thereof.

12. The equipment cabinet of claim 9, wherein the insulator comprises polypropylene.

13. The equipment cabinet of claim 9, wherein the insulator has a substantially U-shaped cross-section.

14. The equipment cabinet of claim 9, wherein the primary bracket comprises sheet metal.

15. The equipment cabinet of claim 9, wherein the secondary bracket comprises sheet metal.

16. The equipment cabinet of claim 9, wherein the hole in the primary bracket is substantially circular.

17. A method of assembling a power distribution unit comprising:
forming a hole in a primary bracket;
mounting a secondary bracket to a rear of the primary bracket, around the hole;
mounting a first central standoff insulator to a front of the secondary bracket such that the first central standoff insulator extends through the hole;
mounting a second central standoff insulator to a front of the first central standoff insulator;
mounting a central busbar to a front of the second central standoff insulator; and
mounting an insulator by mounting a rear portion of the insulator between the first central standoff insulator and the second central standoff insulator, extending a first side portion of the insulator past a first side of the central busbar, and extending a second side portion of the insulator past a second side of the central busbar.

18. The method of claim 17, further comprising:
mounting a first lateral standoff insulator to a front of the primary bracket to a first side of the first central standoff insulator;
mounting a second lateral standoff insulator to a front of the primary bracket to a second side of the first central standoff insulator;
mounting a first lateral busbar to a front of the first lateral standoff insulator; and
mounting a second lateral busbar to a front of the second lateral standoff insulator.

19. The method of claim 18, wherein:
the first side portion of the insulator extends between the second central standoff insulator and the central busbar on one side thereof and the first lateral standoff insulator and the first lateral busbar on an opposite side thereof; and
the second side portion of the insulator extends between the central standoff insulator and the central busbar on one side thereof and the second lateral standoff insulator and the second lateral busbar on an opposite side thereof.

20. The method of claim 17, wherein the insulator comprises polypropylene.
